# EUROPEAN PATENT APPLICATION

(11) **EP 1 898 418 A1**
(43) Date of publication of application: **12.03.2008**
(21) Application number: 06732206.5
(22) Date of filing: 21.04.2006
(51) Int. Cl.: G11B 27/10, G11B 20/10, G11B 27/00

(54) **INFORMATION SEARCH DEVICE, INFORMATION REPRODUCING DEVICE, INFORMATION SEARCH METHOD, INFORMATION SEARCH PROGRAM, AND INFORMATION RECORDING MEDIUM**

(30) Priority: 09.05.2005 JP 2005136570
(71) Applicant: Pioneer Corporation, Tokyo 153-8654 (JP)
(72) Inventor: KODAMA, Yasuteru, Pioneer Corporation, Tsurugashima-shi, Saitama 3502288 (JP)
(74) Representative: Tappe, Hartmut
(86) International application number: PCT/JP2006/308398
(87) International publication number: WO 2006/120867

(57) **Abstract**

The present invention provides an information retrieving apparatus capable of retrieving reproduction information which does not make the bored, while respecting a result of a search performed once.

The apparatus includes a database (1) for storing a plurality of pieces of music information to be reproduced, a retrieving unit (2) for retrieving information by using a preset retrieval parameter and a retrieving method, and outputting a first retrieval result, and a second rearranging unit (5) for storing reproduction history of music information reproduced in the past, and rearranging the reproduction order in the first retrieval result to the same reproduction order as that in the reproduction history with respect to music information included in both of the first retrieval result and the reproduction history, thereby obtaining a second retrieval result.

## Description

### TECHNICAL FIELD

The present invention belongs to the technical fields of an information retrieving apparatus, an information retrieving method, an information retrieving program, and an information recording medium. More specifically, the invention belongs to the technical fields of an information retrieving apparatus, an information retrieving method, and an information retrieving program for retrieving and reproducing a plurality of pieces of reproduction information such as music piece information which is pre-stored, and an information reproducing apparatus for reproducing reproduction information by using the retrieval result.

### BACKGROUND ART

In recent years, generally, a plurality of pieces of music piece information are stored in, for example, a home server or a navigation system for a vehicle, retrieved by a preset retrieval parameter and a retrieving method, and reproduced continuously as BGM (Back Ground Music).

The retrieving methods include a method of retrieving and reproducing stored music piece information at random, and a method of entering a pre-set search word in accordance with the feeling of the user at that time and circumstances and retrieving and reproducing music piece information of lyrics and title a part of which coincides with the search word. For example, Japanese Patent Application Laid-Open No. 2002-150664 (FIGS. 1 and 2 and the like) discloses such a conventional retrieving and reproducing method.

### DISCLOSURE OF THE INVENTION

### Problems to be solved by the Invention

However, the conventional music piece information retrieving method does not consider methods of improving the case where the reproduction interval of the same music piece information is short due to continuous execution of a retrieving process and the case where the same plural music pieces are reproduced in the same order.

Further, in the conventional retrieving method, the reproducing process is performed while placing importance on the result of a retrieval executed once. There is consequently a problem such that when the interval of reproduction of the same music piece is shortened or reproduction of the music piece information in the same order is frequently performed, the user is bored.

The present invention has been achieved in view of the problem. An object of the invention is to provide an information retrieving apparatus, an information retrieving method, and an information retrieving program capable of retrieving reproduction information which does not make the user from being bored while respecting a result of a retrieval performed once (that is, without performing a new search), and to provide an information reproducing apparatus for reproducing reproduction information by using the retrieval result.

### Means for solving the Problems

In order to solve the above problem, the invention according to claim 1 relates to an information retrieving apparatus comprising:
reproduction information storing means for storing a plurality of pieces of reproduction information to be reproduced;
retrieving means for retrieving the reproduction information by using a preset retrieval parameter and a retrieving method, and outputting a first retrieval result;
history storing means for storing reproduction history of the reproduction information reproduced in the past; and
rearranging means, with respect to at least a part of the reproduction information included in both of the first retrieval result and the reproduction history, for rearranging a reproduction order in the first retrieval result to a reproduction order which is the same as that of the part in the reproduction history, thereby obtaining a second retrieval result.

In order to solve the above problem, the invention according to claim 9 relates to an information retrieving apparatus comprising:
reproduction information storing means for storing a plurality of pieces of reproduction information to be reproduced;
retrieving means for retrieving the reproduction information by using a preset retrieval parameter and a retrieving method, and outputting a first retrieval result;
history storing means for storing reproduction history of the reproduction information reproduced in the past; and
rearranging means for eliminating at least a part of the reproduction information included in both of the first retrieval result and the reproduction history, from the first retrieval result, thereby obtaining a second retrieval result.

In order to solve the above problem, the invention according to claim 15 relates to an information reproducing apparatus comprising:
the information retrieving apparatus according to any one of claims 1 to 14; and
reproducing means for reproducing the reproduction information retrieved by the retrieving means by using a reproduction order in the second retrieval result.

In order to solve the above problem, the invention according to claim 16 relates to an information retrieving method executed in an information retrieving apparatus including reproduction information storing means for storing a plurality of pieces of reproduction information to be reproduced, and history storing means for storing reproduction history of the reproduction information reproduced in the past, comprising:
a retrieving step for retrieving the reproduction information in the reproduction information storing means by using a preset retrieval parameter and a retrieving method, and outputting a first retrieval result; and
a rearranging step, with respect to at least a part of the reproduction information included in both of the first retrieval result and the stored reproduction history, for rearranging a reproduction order in the first retrieval result to a reproduction order which is the same as that of the part in the reproduction history, thereby obtaining a second retrieval result.

In order to solve the above problem, the invention according to claim 17 relates to an information retrieving method executed by an information retrieving apparatus including reproduction information storing means for storing a plurality of pieces of reproduction information to be reproduced, and history storing means for storing reproduction history of the reproduction information reproduced in the past, comprising:
a retrieving step for retrieving preset retrieval number of pieces of the reproduction information in the reproduction information storing means by using a preset retrieval parameter and a retrieving method, and outputting a first retrieval result; and
a rearranging step for eliminating at least a part of the reproduction information included in both of the first retrieval result and the reproduction history from the first retrieval result, thereby obtaining a second retrieval result.

In order to solve the above problem, the invention according to claim 18 relates to an information reproducing method comprising:
the information retrieving method according to claim 16 or 17; and
a reproducing step for reproducing the reproduction information retrieved in the retrieving step by using a reproduction order in the second retrieval result.

In order to solve the above problem, the invention according to claim 19 relates to an information retrieving program for making a computer included in an information retrieving apparatus having reproduction information storing means for storing a plurality of pieces of reproduction information to be reproduced, and history storing means for storing reproduction history of the reproduction information reproduced in the past, function as the retrieving means and the rearranging means in any of claims 1 to 14.

In order to solve the above problem, the invention according to claim 20 relates to an information recording medium where the information retrieving program according to claim 19 is recorded so that it can be read by the computer.

### BRIEF DESCRIPTION OF THE DRAWINGS

FIG. 1 is a block diagram showing a schematic configuration of an information reproducing apparatus as an embodiment.
FIG. 2 is a flowchart showing rearranging process in the embodiment.
FIG. 3 is a diagram illustrating the rearranging process in the embodiment.
FIGS. 4A and 4B are a flowchart and a diagram, respectively, showing process of updating reproduction history information in the embodiment.

### DESCRIPTION OF REFERENCE NUMERALS

1 database
2 retrieving unit
3 parameter input unit
4 first rearranging unit
5 second rearranging unit
6 reproducing unit
7 speaker
S information reproducing apparatus
L1, L2, L3, L4, L5, L6, L7, L8, L9, L10, L11 re-arrangement lists
PL, PL1, PL2 reproduction history information
C4, C5, C6, C7, C8, C9, C10 rearrangement target lists

### BEST MODE FOR CARRYING OUT THE INVENTION

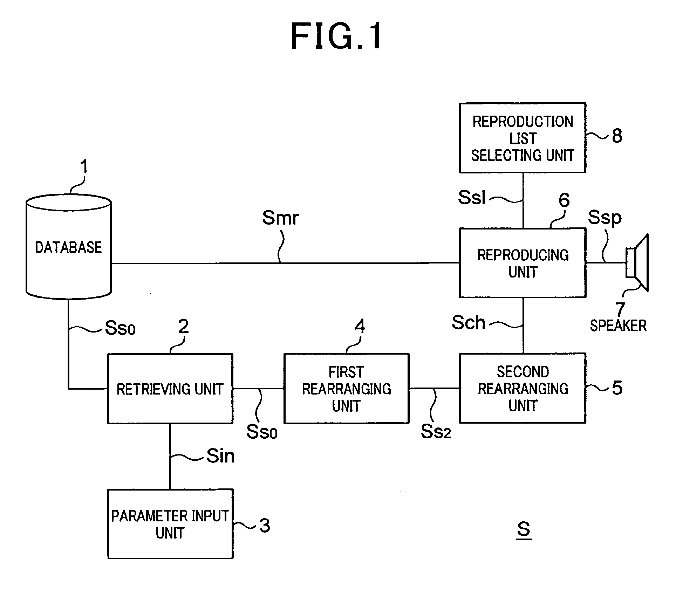

A best mode for carrying out the present invention will now be described with reference to FIGS. 1 to 3. The following embodiment relates to the case of applying the present invention to an information reproducing apparatus for retrieving music piece information as pre-stored reproduction information, and reproducing music pieces corresponding to music piece information included in the retrieval result in accordance with a reproduction order included in the retrieval result.

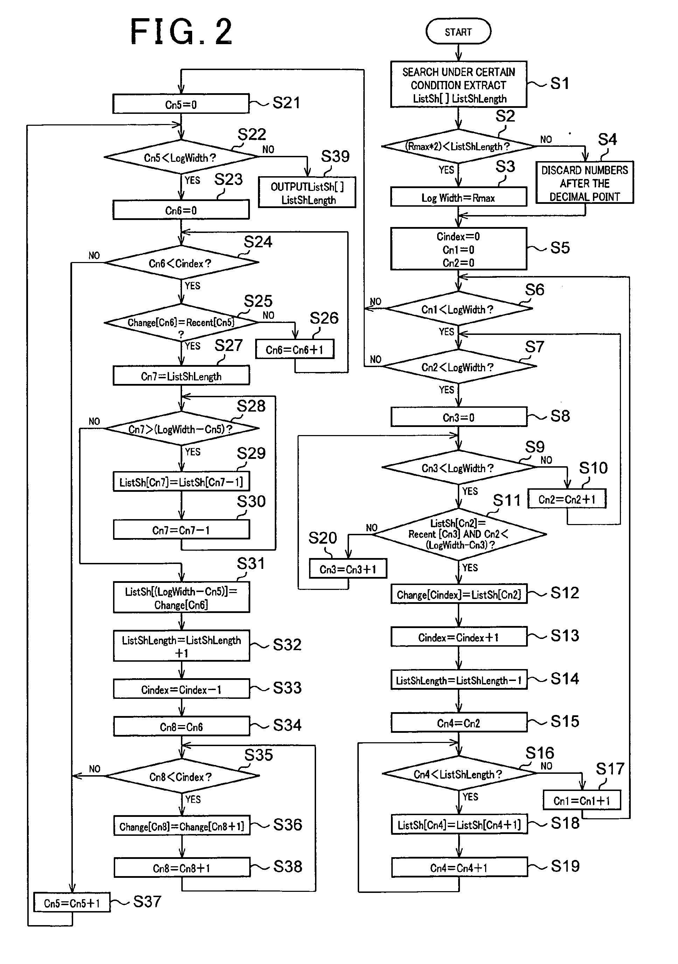

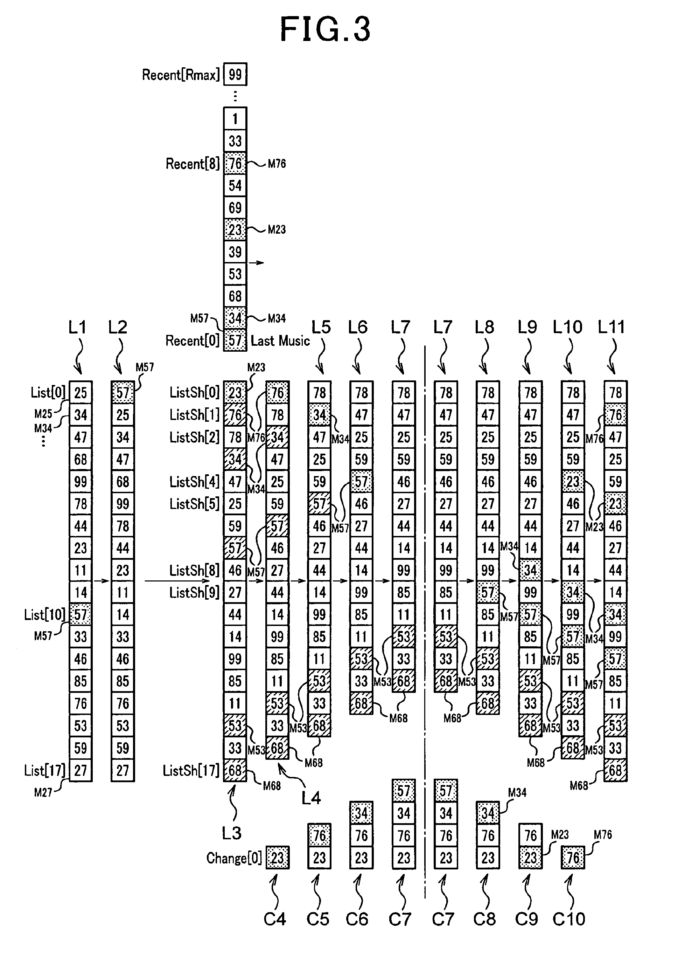

FIG. 1 is a block diagram showing a schematic configuration of an information reproducing apparatus as an embodiment. FIG. 2 is a flowchart showing the operation of the embodiment in the information reproducing apparatus. FIG. 3 is a diagram illustrating the retrieving operation as an operation example according to the flowchart.

### (I) General Configuration

First, a general configuration and general operation of the information reproducing apparatus of the embodiment will be described with reference to FIG. 1.

As shown in FIG. 1, an information reproducing apparatus S of the embodiment has a database 1 as reproduction information storing means, a retrieving unit 2 as retrieving means, a parameter input unit 3, a first rearranging unit 4, a second rearranging unit 5 as history storing means and rearranging means, a reproducing unit 6 as reproducing means, a reproduction list selecting unit 8, and a speaker 7.

The database 1 stores music piece information corresponding to a music piece to be reproduced by the information reproducing apparatus S of the embodiment together with identification information that identifies the music piece information.

When a retrieval parameter for performing a search at the first stage which will be described later is entered by an operation of the user, the parameter input unit 3 generates parameter information Sin indicative of the entered retrieval parameter and outputs it to the retrieving unit 2.

The retrieving unit 2 retrieves the music piece information stored in the database 1 on the basis of the retrieval parameter included in the parameter information Sin, extracts identification information indicative of the music piece information that coincides with the retrieval parameter as an identification information signal Sso including the retrieved identification information in a reproduction order that coincides with the retrieval parameter from the database 1, and outputs the signal Sso to the first rearranging unit 4.

The first rearranging unit 4 rearranges the reproduction order in the identification information included in the identification information signal Sso a plurality of times, for example, at random, generates an identification information signal Ss2 including finally rearranged identification information in the rearranged reproduction order, and outputs the signal Ss2 to the second rearranging unit 5.

Consequently, the second rearranging unit 5 further rearranges the identification information rearranged by the first rearranging unit 4 by a method which will be described later with reference to FIG. 2, generates an identification information signal Sch including the rearranged identification information in the rearranged reproduction order, and outputs the signal Sch to the reproducing unit 6. The signal including the identification information in the reproduction order rearranged by the second rearranging unit 5 is stored as a reproduction list (that is, a reproduction list indicative of the identification information in the database 1 retrieved by the retrieving unit 2 and the reproduction order) into a not-shown memory in the reproducing unit 6. In such a manner, one or a plurality of reproduction lists are stored in the reproducing unit 6.

In the not-shown memory in the second rearranging unit 5, the preset number of pieces of identification information in the identification information corresponding to music pieces reproduced finally (in other words, recently) are stored as reproduction history information together with the reproduction order.

On the other hand, in the reproduction list selecting unit 8, an operation for selecting any of the reproduction lists stored in the reproducing unit 6 by the above-described process is executed by the user. From the reproduction list selecting unit 8, an operation signal Ss1 indicative of a reproduction list selected by the operation is generated and output to the reproducing unit 6.

The reproducing unit 6 extracts, as music piece information signals Smr, music piece information identified by the identification information included in the reproduction list indicated by the operation signal Ss1 from the database 1, executes a necessary decoding process or the like to reproduce the signals Smr in accordance with the reproduction order included in the reproduction list, generates output signals Ssp corresponding to the music piece information, and outputs the output signals Ssp to the speaker 7 to generate sound.

By the series of operations described above, music pieces included in the reproduction list selected by the user are sequentially reproduced in accordance with the reproduction order included in the reproduction list, and sound is generated.

### (II) Example of Rearranging Process

Next, a rearranging process of the second time in the embodiment, executed by the second rearranging unit 5 will be described by referring to FIG. 2 showing the flowchart of the process and FIG. 3 showing a concrete example of the process.

First, with reference to the flowchart of FIG. 2, the rearranging process of the second time will be generally described.

In the flowchart of FIG. 2, a parameter ListSH[ ] indicates a reproduction order after rearrangement of the first rearranging unit 4 in an identification information list (hereinbelow, called a rearrangement list) including identification information retrieved by the retrieving unit 2 in the reproduction order. A parameter ListSHLength indicates the number of pieces of identification information included in the identification information list (in other words, the length of the identification information list). A parameter LogWidth indicates the number of pieces of identification information used for a rearranging process in the second rearranging unit 5 in identification information included in the reproduction history. A parameter Recent[ ] indicates the reproduction order in the reproduction history information. A parameter Rmax indicates the number of pieces of identification information included in the reproduction history information (in other words, the length of the reproduction history information) (the value of the parameter Rmax is preset at the time of the rearranging process of the second time). A parameter Change[ ] indicates the extraction order in a list including identification information temporarily extracted for a rearranging process in the second rearranging unit 5 (hereinbelow, called a rearrangement target list) from the list indicative of the reproduction order after rearrangement by the first rearranging unit 4. A parameter Cindex indicates the number of pieces of identification information extracted as the rearrangement target list.

In the flowchart of FIG. 2, parameters Cn1 to Cn8 are counters independently performing counting operations. The counter Cn1 counts the number of times of extracting identification information from the rearrangement list to construct the rearrangement target list. The counters Cn2, Cn4, and Cn7 indicate the reproduction order in the rearrangement list. The counters Cn3 and Cn5 indicate the reproduction orders in the reproduction history information. Cn6 and Cn8 indicate counters each indicative of the order of extraction from the rearrangement list in the rearrangement target list.

First, a process of moving identification information to undergo the rearranging process in the second rearranging unit 5, executed in steps S1 to S20 shown in FIG. 2 from the rearrangement list to the rearrangement target list will be described.

As shown in FIG. 2, as processes in steps S1 to S20 in the rearranging process of the embodiment, first, the length of a rearrangement list made of identification information rearranged by the first rearranging unit 4 is extracted from the rearrangement list and set as the parameter ListSHLegth (step S1).

The value of the parameter Rmax is compared with the present value of the parameter ListSHLength (step S2). When the value obtained by doubling the value of the parameter Rmax is equal to or larger than the present value of the parameter ListSHLength (N in step S2), the value which is the half of the present value of the parameter ListSHLength is set as the value of the parameter LogWidth, and the program advances to step S5 which will be described later. On the other hand, when the value obtained by doubling the value of the parameter Rmax is smaller than the present value of the parameter ListSHLength (Y in step S2), the present value of the parameter LogWidth is set to be equal to the value of the parameter Rmax, and the program advances to the step S5.

Next, the value of the parameter Cindex and the values of the counters Cn1 and Cn2 are initialized (step S5). Further, a check is made to see whether the present value of the counter Cn1 is smaller than the value of the parameter LogWidth or not, that is, whether extraction of identification information of the necessary number of times has been completed or not (step S6). When the extraction has not been completed (Y in step S6), a check is made to see whether the present value of the counter Cn2 is smaller than the value of the parameter LogWidth or not (step S7). When the value of the counter Cn2 is smaller than the value of the parameter LogWidth (Y in step S7), the value of the counter Cn3 is initialized (step S8).

On the other hand, when the extraction of the identification information of the necessary number of times has been completed in the determination of step S6 (N in step S6), or when the value of the counter Cn2 is equal to or larger than the value of the parameter LogWidth in the determination of step S7 (N in step S7), the program advances to the process in step S21 which will be described later.

After the initialization in step S8, whether the present value of the counter Cn3 is smaller than the value of the parameter LogWidth or not is determined (step S9). When the value of the counter Cn3 is equal to or larger than the value of the parameter LogWidth (N in step S9), the present value of the counter Cn2 is incremented only by "1" (step S10), and the program returns to the step S7. On the other hand, when the value of the counter Cn3 is smaller than the value of the parameter LogWidth (Y in step S9), a check is made to see whether or not the music piece information identified by the identification information indicated by the parameter ListSH[Cn2] using the present value of the counter Cn2 as the reproduction order and the music piece information identified by identification information indicated by the parameter Recent[Cn3] using the present value of the counter Cn3 as the reproduction order is the same, and to see whether or not the present value of the counter Cn2 is smaller than a value obtained by subtracting the present value of the counter Cn3 from the value or the parameter LogWidth (step S11).

When one of the two conditions in the determination of step S 11 is not satisfied (N in step S11), the present value of the counter Cn3 is incremented only by "1" (step S20) and the program returns to the step S9. On the other hand, when both of the two conditions in the determination of step S11 are satisfied (Y in step S11), the identification information indicated by the parameter ListSH[Cn2] using the present value of the counter Cn2 as its reproduction order is moved from the rearrangement list to the rearrangement target list using the present value of the parameter Cindex as its reproduction order (step S12). After that, the present value of the parameter Cindex is incremented only by "1" (step S13), and the present value of the parameter ListSHLength is decremented only by "1" (step S14).

Next, the value of the counter Cn4 is set as the present value of the counter Cn2 (step S15) and a check is made to see whether the value of the counter Cn4 is smaller than the present value of the parameter ListSHLength or not (step S16). When the value of the counter Cn4 is equal to or larger than the present value of the parameter ListSHLength (N in step S16), the present value of the counter Cn1 is incremented only by "1" (step S17) and the program returns to the process in the step S6.

On the other hand, when the value of the counter Cn4 is smaller than the present value of the parameter ListSHLength (Y in step S16), the parameter ListSH[Cn4] as a parameter indicative of identification information to which attention is paid in the rearrangement list is incremented only by one piece of identification information (step S 18). Further, the value of the counter Cn4 itself is also incremented only by "1" (step S19) and the program returns to the process of the step S16.

The processes in the steps S1 to S20 are executed on all of the identification information in the reproduction order in the previous rearrangement list in accordance with the reproduction order advanced only by the value of the parameter LogWidth (see the step S3 or S4) when viewed from the reproduction order in the reproduction history when the rearrangement list is coupled to the end of the reproduction history information, in the identification information included in both of the reproduction history information and the rearrangement list. By the execution, the transfer of the identification information to be subject to the rearranging process in the second rearranging unit to the rearrangement target list is finished.

Next, the processes in the step S21 and the following steps will be described. The processes in the steps S21 to S38 relate to rearranging process of the second rearranging unit 5 performed by rearranging the identification information moved to the rearrangement target list so that the reproduction order becomes different from that after rearrangement of the first rearranging unit 4 and returning the resultant information into the rearrangement list.

Specifically, after completion of the movement of the identification information to be subject to the rearranging process in the second rearranging unit to the rearrangement target list, the value of the counter Cn5 is initialized (step S21), and whether the present value of the counter Cn5 is smaller than the value of the parameter LogWidth or not is determined (step S22). When the present value of the counter Cn5 is equal to or larger than the value of the parameter LogWidth (N in step S22), it is regarded that the rearranging process in the second rearranging unit 5 has been completed and the rearrangement list after the completion is output as a new reproduction list to the reproducing unit 6 (step S39), and the processes shown in FIG. 2 are finished.

On the other hand, when the present value of the counter Cn5 is smaller than the value of the parameter LogWidth in the determination of the step S22 (Y in step S22), the value of the counter Cn6 is initialized (step S23) and whether the present value of the counter Cn6 is smaller than the present value of the parameter Cindex or not is determined (step S24). When the present value of the counter Cn6 is equal to or larger than the present value of the parameter Cindex (N in step S24), the value of the counter Cn5 is incremented only by "1" (step S37), and the program returns to the process in the step S22.

On the other hand, when the present value of the counter Cn6 is smaller than the present value of the parameter Cindex in the determination of step S24 (Y in step S24), a check is made to see whether or not music piece information identified by identification information indicated by the parameter Change[Cn6] using the present value of the counter Cn6 as its reproduction order and music piece information identified by identification information of the parameter Recent[Cn5] using the present value of the counter Cn5 as its reproduction order is the same (step S25). When the music piece information is not the same (N in step S25), the value of the counter Cn6 is incremented only by "1" (step S26), and the program returns to the process in the step S24.

On the other hand, when the music piece information is the same in the determination of the step S25 (Y in step S25), the value of the counter Cn7 is set as the value of the parameter ListSHLength (step S27). A check is made to see whether or not the present value of the counter Cn7 is larger than a value obtained by subtracting the present value of the counter Cn5 from the value of the parameter LogWidth (step S28).

When the present value of the counter Cn7 is larger than the value obtained by subtracting the present value of the counter Cn5 from the value of the parameter LogWidth (Y in step S28), the parameter ListSH[Cn7] as a parameter indicative of the identification information to which attention is paid in the rearrangement list is decremented only by one (step S29). Further, the value of the counter Cn7 itself is also decremented only by "1" (step S30), and the program returns to the process in the step S28.

When the present value of the counter Cn7 is equal to or less than a value obtained by subtracting the present value of the counter Cn5 from the value of the parameter LogWidth (N in step S28), music piece information identified by identification information indicated by a parameter ListSH[(LogWidth-Cn5)] using, as its reproduction order, a value obtained by subtracting the present value of the counter Cn5 from the value of the parameter LogWidth is overwritten with music piece information identified by identification information indicated by the parameter Change[Cn6] using, as its reproduction order, the present value of the counter Cn6 (step S31). The value of the parameter ListSHLength is incremented only by "1" (step S32), and the value of the parameter Cindex is decremented only by "1" (step S33).

Next, the value of the counter Cn8 is set to the same value as the present value of the counter Cn6 (step S34). After that, whether the present value of the counter Cn8 is smaller than the present value of the parameter Cindex or not is determined (step S35). When the present value of the counter Cn8 is equal to or larger than the present value of the parameter Cindex (N in step S35), the present value of the parameter Cn5 is incremented only by "1" (step S37) and the program returns to the step S22.

On the other hand, when it is determined in the step S35 that the present value of the counter Cn8 is larger than the present value of the parameter Cindex (Y in step S35), the parameter Change[Cn8] as a parameter indicative of identification information to which attention is paid in the rearrangement target list is incremented only by one piece of the identification information (step S36). Further, the value of the counter Cn8 itself is also incremented only by "1" (step S38), and the program returns to the process in the step S35.

By repeating the processes in the steps S21 to S38 on all of the identification information included in the rearrangement target list, the rearranging process of the second rearranging unit 5 is completed, which rearranges the identification information included in the rearrangement target list so as to be in reproduction order different from the reproduction order after rearrangement of the first rearranging unit 4, and returns the resultant identification information to the rearrangement list.

A concrete example of changing a rearrangement list in the case where the processes in the flowchart of FIG. 2 are executed will be described with reference to FIG. 3. In FIG. 3, the parameters ListSH[ ], Recent[ ], and Change[ ] are concretely shown.

In the music piece information retrieving process of the information reproducing apparatus S as a whole of the embodiment, first, by retrieval of the retrieving unit 1, for example, identification information of 18 music pieces as shown in a rearrangement list L1 shown in FIG. 3 is obtained together with its reproduction order. In rearrangement lists L1 to L11 in FIG. 3, it is assumed that music pieces are reproduced from a music piece, as the head of the reproduction order, identified by identification information M in the reproduction order indicated by the parameter ListSH[O] (identification information M25 in the rearrangement list L1) (concretely, for example, the 25th music piece stored in the database 1). In the case of using the rearrangement list L1 shown in FIG. 3 as a reproduction list, music pieces are reproduced in the reproduction order of the music piece identified by the identification information M25 as the head, a music piece identified by identification information M34, a music piece identified by identification information M47, ..., and a music piece identified by identification information M27.

Next, the first rearranging unit 4 receives the rearrangement list L1, executes a process of changing the reproduction order in the rearrangement list L1 at random once or a plurality of times, for example, obtains a rearrangement list L2 during the changing process, finally obtains a rearrangement list L3, and outputs the rearrangement list L3 to the second rearranging unit 5. In the case of FIG. 3, in the process performed by the first rearranging unit 4, for example, identification information M57 in the rearrangement list L1 is positioned at the head in the rearrangement list L2 and finally located in the eighth reproduction order in the rearrangement list L3.

In the second rearranging unit 5, the reproduction history information PL is stored in advance. In the reproduction history information PL, identification information M of the number of pieces indicated by the value of the preset parameter LogWidth ("9" in the case of FIG. 3) is used for a rearranging process of the second rearranging unit 5 executed on the rearrangement list L3. In the reproduction history information PL, the lower identification information M is, the more the music piece identified by the identification information M is played recently. Further, in the case of FIG. 2, the value "9" of the parameter LogWidth is the half of all of the number of pieces of identification information M included in the rearrangement list L3.

When the processes in the steps S5 to S20 shown in FIG. 2 are repeated, the identification information M23 is included at the head (the reproduction order indicated by the parameter ListSh[0]) of the rearrangement list L3. The identification information M23 also exists in the reproduction history information PL and is in the reproduction order in the rearrangement list L3 having the music pieces indicated by the value "9" of the parameter LogWidth from the reproduction order of the identification information M23 in the reproduction history information PL. Consequently, as shown in the rearrangement list L4 and the rearrangement target list C4 in FIG. 3, the identification information M23 at the head of the rearrangement list L3 is moved to the head of the rearrangement target list C4 (the extraction order indicated by the parameter Change[0]). All of the identification information M in the reproduction orders from the parameter ListSh[1] to the parameter ListSh[17] in the rearrangement list L3 is moved to reproduction orders from the parameter ListSh[0] to the parameter ListSh[16] in the rearrangement list L4.

Identification information M76 is included at the head of the rearrangement list L4. The identification information M76 also exists in the reproduction history information PL, and is in the reproduction order in the rearrangement list L4 which has music pieces of the value "9" of the parameter LogWidth starting from the reproduction order of the identification information M76 in the reproduction history information PL (in this case, the ninth music piece). Consequently, as shown in the rearrangement list L5 and the rearrangement target list C5 in FIG. 3, the identification information M76 at the head of the rearrangement list L4 is moved to the second extraction order (the extraction order indicated by the parameter Change[1]) in the rearrangement target list C5. All of the identification information M in the reproduction orders from the parameter ListSh[1] to the parameter ListSh[16] in the rearrangement list L4 is moved to the reproduction orders of the parameter ListSh[0] to the parameter ListSh[15] in the reproduction list L5.

Since identification information M78 is included at the head of the rearrangement list L5 and the identification information M78 does not exist in the reproduction history information PL, a check is made to see whether or not identification information M34 included in the second order (the reproduction order indicated by the parameter ListSh[1]) in the rearrangement list L5 is included in the reproduction history information PL. The identification information M34 also exists in the reproduction history information PL, and is in the reproduction order in the rearrangement list L5 in the music pieces of the value "9" of the parameter LogWidth (in this case, the "third" music piece) from the reproduction order of the identification information M34 in the reproduction history information PL. Consequently, as shown in the rearrangement list L6 and the rearrangement target list C6 in FIG. 3, the identification information M78 in the rearrangement list L5 is moved to the third extraction order (the extraction order indicated by the parameter Change[2]) in the rearrangement target list C6. All of the identification information M in the reproduction orders from the parameter ListSh[2] to the parameter ListSh[15] in the rearrangement list L5 is moved to the reproduction orders from the parameter ListSh[1] to the parameter ListSh[14] in the reproduction list L6.

Next, processes similar to those performed on the rearrangement list L5 are performed also on the rearrangement list L6. In this case, a process of collating the identification information M in the reproduction history information PL with the identification information M in the rearrangement list L6 starts from the second identification information M47 in the rearrangement list L6. Finally, the identification information M57 in the rearrangement list L6 is moved to the fourth extraction order (the extraction order indicated by the parameter Change[3]) in the rearrangement target list C7. All of the identification information M in the reproduction orders from the parameter ListSh[5] to the parameter ListSh[14] in the rearrangement list L6 is moved to the reproduction orders from the parameter ListSh[4] to the parameter ListSh[13] in the rearrangement list L7.

Subsequently, processes similar to those performed on the rearrangement list L5 or L6 are performed also on the rearrangement list L7. In this case, the process of collating the identification information M in the reproduction history information PL with the identification information M in the rearrangement list L6 starts from the fifth identification information M46 in the rearrangement list L7. Since there is no match with the identification information M in the reproduction history information PL until the reproduction order indicated by the parameter ListSh[8] in the rearrangement list L7, at this time point, the process of extracting the identification information M to be rearranged (steps S5 to S20 in FIG. 2) is completed.

When the processes in the steps S21 to S38 in FIG. 2 are repeated on the rearrangement list L7 and the rearrangement target list C7 shown in FIG. 3, since the identification information M57 at the head (the reproduction order indicated by the parameter Recent[0]) of the reproduction history information PL is included in the rearrangement target list C7, as shown in the rearrangement list L8, all of the identification information M in the reproduction orders from the parameter ListSh[9] to the parameter ListSh[13] in the original arrangement list L7 is moved to the reproduction orders from the parameter ListSh[10] to the parameter ListSh[14] in the rearrangement list L8. The identification information M57 in the reproduction history information PL is copied to the reproduction order indicated by the parameter ListSh[9] in the rearrangement list L8 so as to be the tenth (= the value of the parameter LogWidth+1) from the original reproduction order in the reproduction history information PL. After that, the identification information M57 in the rearrangement target list C7 is deleted, thereby obtaining a rearrangement target list C8.

In the rearrangement list L8 and the rearrangement target list C8, the identification information M34 in the reproduction order indicated by the parameter Recent[1] in the reproduction history information PL is included in the rearrangement target list C8. Consequently, all of the identification information M in the reproduction orders from the parameter ListSh[8] to the parameter ListSh[14] in the original rearrangement list L8 is moved to the reproduction orders from the parameter ListSh[9] to the parameter ListSh[15] in the rearrangement list L9. Further, the identification information M34 in the reproduction history information PL is copied to the reproduction order indicated by the parameter ListSh[8] in the rearrangement list L9 so as to be the tenth music piece from the original reproduction order in the reproduction history information PL. After that, the identification information M34 in the rearrangement target list C8 is deleted, thereby obtaining a rearrangement target list C9.

In the rearrangement list L9 and the rearrangement target list C9, the identification information M23 in the reproduction order indicated by the parameter Recent[5] in the reproduction history information PL is included in the rearrangement target list C9. Consequently, as shown in the rearrangement list L10, all of the identification information M in the reproduction orders from the parameter ListSh[4] to the parameter ListSh[15] in the original rearrangement list L9 is moved to the reproduction orders from the parameter ListSh[5] to the parameter ListSh[16] in the rearrangement list L10. Further, the identification information M23 in the reproduction history information PL is copied to the reproduction order indicated by the parameter ListSh[4] in the rearrangement list L10 so as to be the tenth music piece from the original reproduction order in the reproduction history information PL. After that, the identification information M23 in the rearrangement target list C9 is deleted, thereby obtaining a rearrangement target list C10.

Finally, in the rearrangement list L10 and the rearrangement target list C10, the identification information M76 in the reproduction order indicated by the parameter Recent[8] in the reproduction history information PL is included in the rearrangement target list C10. Consequently, all of the identification information M in the reproduction orders from the parameter ListSh[1] to the parameter ListSh[16] in the original rearrangement list L10 is moved to the reproduction orders from the parameter ListSh[2] to the parameter ListSh[17] in the rearrangement list L11. Further, the identification information M76 in the reproduction history information PL is copied to the reproduction order indicated by the parameter ListSh[1] in the rearrangement list L11 so as to be the tenth music piece from the original reproduction order in the reproduction history information PL.

After the above processes, there is no identification information M constructing the rearrangement target list C, so that the rearranging process in the second rearranging unit 5 in the embodiment is finished.

After that, the rearrangement list L11 newly generated in the second rearranging unit 5 is stored as a new reproduction list into the reproducing unit 6 and used for the following reproducing process.

### (III) Process of Updating Reproduction History Information

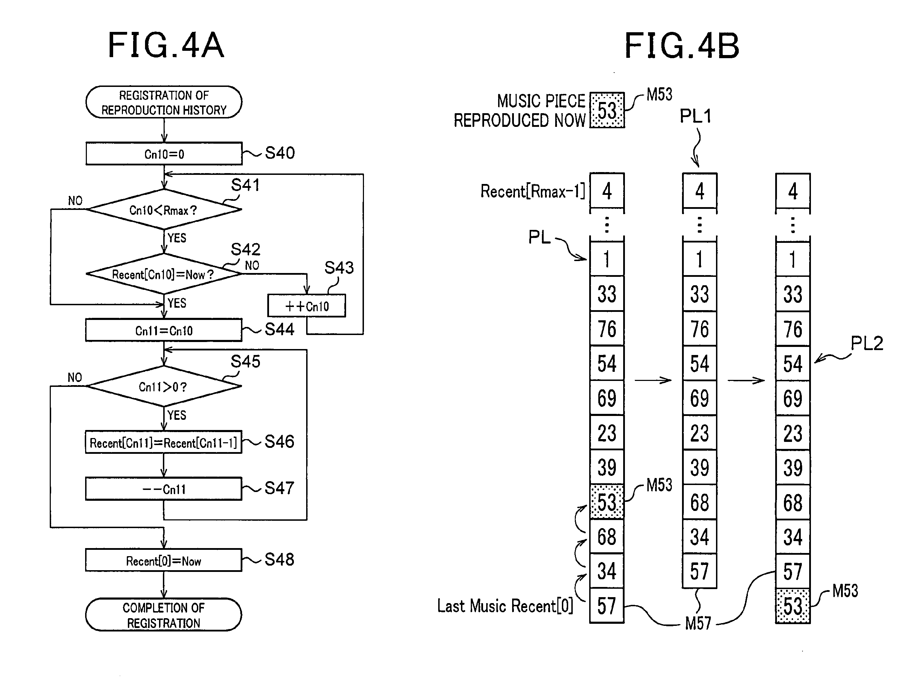

A process of updating the reproduction history information PL (that is, the process of updating the reproduction history information PL performed when the number of pieces of reproduced music piece information is increased by one) after a music piece corresponding to one piece of music piece information is reproduced by using a reproduction list corresponding to the rearrangement list L finally rearranged in the rearranging process of the second time in the embodiment will be concretely described with reference to FIGS. 4A and 4B.

FIG. 4A is a flowchart showing the updating process, and FIG. 4B is a diagram showing a concrete example of the updating process.

First, the updating process will be generally described with the flowchart shown in FIG. 4A.

In the flowchart of FIG. 4A, the definition of the parameters Recent[ ] and Rmax is the same as that in the rearranging process of the second time. A parameter "Now" denotes identification information indicative of music piece information reproduced most recently. The parameters Cn10 and Cn11 denote counters each for performing counting operation. The counters sequentially show reproduction orders in the reproduction history information PL from the reproduction information reproduced most recently (that is, music piece information corresponding to the value "0" of each of the counters Cn10 and Cn11 is music piece information reproduced most recently).

As shown in FIG. 4A, in the process of updating the reproduction history information PL in the embodiment, first, the value of the counter Cn10 is initialized (step S40). Next, the present value of the counter Cn10 is compared with the value of the parameter Rmax (step S41).

When the present value of the counter Cn10 is smaller than the value of the parameter Rmax (Y in step S41), a check is made to see whether music piece information identified by identification information indicated by the parameter Recent[Cn10] using the present value of the counter Cn10 as its reproduction order, and most recent music piece information identified by the identification information indicated by the parameter Now is the same or not (step S42). When it is determined in step S41 that the present value of the counter Cn10 is equal to or larger than the value of the parameter Rmax (N in step S41), the music piece information which is most recently reproduced is not included in the present reproduction history information PL. Consequently, the program advances to the step S44.

When it is determined in the step S42 that music piece information identified by identification information shown by the parameter Recent[Cn10] whose reproduction order is the present value of the counter Cn10 and the most recent music piece information identified by the identification information indicated by the parameter Now is not the same (N in step S42), the value of the parameter Cn10 is incremented only by "1" to retrieve the same music piece information from the present reproduction history information PL (step S43), and the program returns to the process in the step S41. On the other hand, when it is determined in the step S42 that music piece information identified by identification information shown by the parameter Recent[Cn10] whose reproduction order is the present value of the counter Cn10 and the most recent music piece information identified by the identification information indicated by the parameter Now is the same (N in step S42), it is regarded that the most recently reproduced music piece information is included in the reproduction history information PL. Next, the value of the parameter Cn11 is newly set as the value of the parameter Cn10 at that time (step S44).

By repeating the processes in the steps S41 to S43, whether the most recently reproduced music piece information is included in the present reproduction history information PL or not is determined. When it is included, the reproduction order of the information is the value of the parameters Cn10 and Cn11 at that time.

Whether the present value of the parameter Cn11 is larger than "0" or not is determined as the process in the step S45 (step S45). When the present value of the parameter Cn11 is larger than "0" (Y in step S45), the music piece information of the reproduction order (that is, the same music piece information as the music piece information most recently reproduced) indicated by the value of the parameter Cn11 in the present reproduction history information PL is replaced with music piece information whose reproduction order is lower by one (that is, reproduced subsequent to the most recently reproduced information) (step S46), the value of the parameter Cn11 is decremented only by "1" (step S47), and the program returns to the step S45.

When it is determined in the step S45 that the present value of the parameter Cn11 is equal to "0" (N in step S45), music piece information indicated by the parameter Now is inserted in the reproduction order of the music piece information most recently reproduced in the reproduction history information PL (step S48), and the process of updating the reproduction history information PL is finished.

A concrete example of updating the reproduction history information PL in the case where the updating process of the flowchart of FIG. 4A is executed will be described with reference to FIG. 4B. FIG. 4B concretely shows the parameter Recent[ ] and the parameter Now.

As shown in FIG. 4B, it is assumed that music piece information most recently reproduced is a music piece identified by identification information M53, and the present reproduction history information is reproduction history information PL shown in the left part of FIG. 4B.

When the processes in the steps S41 to S43 shown in FIG. 4A are repeated, as shown in the left part of FIG. 4B, it is found that music piece information corresponding to the same music piece as that of the music piece information most recently reproduced is included in the reproduction order in the reproduction history information PL in which the value of the parameter Cn10 is "3". After that, by repeating the steps S45 to S47 shown in FIG. 4A, the identification information M53 in the reproduction history information PL is deleted. The reproduction order of each of identification information M68, M34, and M57 lower than the identification information M53 (on the most recent side on the time base) is raised by one, thereby obtaining reproduction history information PL1 (see arrows in the reproduction history information PL on the left side in FIG. 4). Finally, by executing the process in step S48 shown in FIG. 4A, the identification information M53 identifying the most recently reproduced music piece is inserted to the position of the latest reproduction order. Updating of the reproduction history information PL is finally finished, and new reproduction history information PL2 is stored.

By the updating process described above with reference to FIGS. 4A and 4B, a plurality of pieces of the identification information M indicative of the same music piece are not included in the reproduction history information PL in the embodiment. Thus, the rearranging process in the second rearranging unit 5 is proceeded without any problem.

As described above, in the rearranging process in the information reproducing apparatus S of the embodiment, a part of the identification information M included in both of the rearrangement list and the reproduction history information is rearranged so that the reproduction order in the rearrangement list L3 becomes the same as that of the reproduction history information. The reproduction order of a recently reproduced music piece can be prevented from being positioned on the head side in the rearrangement list L3, and the same music piece can be prevented from being reproduced again in a short interval.

Therefore, in addition to the rearrangement in the range of the first retrieval result, while respecting the rearrangement list L3, a music piece search can be performed without making the user bored.

By executing the process on all of identification information in the reproduction orders raised only by the value of the parameter LogWidth from the reproduction order in the reproduction history information PL, the reproduction orders of music pieces at the end of the rearrangement list L3 are not rearranged. Thus, the rearranging process can be simplified.

Since the value of the parameter LogWidth is set according to the number of pieces of the identification information M in the reproduction history information PL, reproduction of a music piece can be prevented from being repeated in short intervals.

Further, the rearranging process is performed by using a value obtained by adding "1" to the value of the parameter LogWidth, while utilizing the initial rearrangement list L3, music pieces can be reproduced only by rearranging the minimum reproduction orders.

Since the rearranging process is performed by inserting at least one piece of other identification information M included in the rearrangement list L3 between adjacent identification information M to be subject to the rearranging process, a music piece reproduced in the past can be prevented from being reproduced continuously.

Further, the result of rearranging the identification information M in the rearrangement list L1 at random is used as the rearrangement list L3. Thus, the randomness of the reproduction orders of music pieces can be improved.

In the foregoing embodiment, a part (the identification information M57, M34, M23, and M76) of the identification information M included in both of the reproduction history information PL and the rearrangement list L3 undergoes the rearrangement process. Alternatively, the rearranging process in the second rearranging unit 5 in the embodiment may be performed on all of the identification information M included in both of the reproduction history information PL and the rearrangement list L3.

In this case, in addition to the effects of the embodiment, each of music pieces reproduced once can be reproduced again after an interval of a necessary amount.

In the foregoing embodiment, the rearranging process is performed in accordance with a predetermined rule on a part (the identification information M57, M34, M23, and M76) of the identification information M included in both of the reproduction history information PL and the rearrangement list L3. It is also possible to shorten the identification information M, move it to the end of the rearrangement list L3, and rearrange the resultant identification information M so that the reproduction orders in the rearrangement list M after movement are the same as those in the reproduction history information PL.

In this case, in addition to the effects of the embodiment, a music piece once reproduced can be prevented from being reproduced again at a short interval.

In the foregoing embodiment, the reproduction orders of a part of the identification information M included in both of the reproduction history information PL and the rearrangement list L3 are rearranged. Alternatively, the part may be deleted from the rearrangement list L3.

In this case, a music piece reproduced in the past can be perfectly prevented from being reproduced again at short intervals.

Further, all of the identification information M included in both of the reproduction history information PL and the rearrangement list L3 may be deleted from the rearrangement list L3.

In the embodiments and the like, the case of retrieving and reproducing music piece information stored in the database 1 has been described. The present invention can be also applied to the case of storing motion picture information such as a movie as reproduction information and retrieving and reproducing it.

By recording a program corresponding to the flowchart of FIG. 2 in an information recording medium such as a flexible disk or hard disk, or obtaining the program via the Internet or the like and recording it, and reading and executing it by a general computer, the computer can be used as the retrieving unit 2 and the first and second rearranging units 4 and 5.

## Claims

1. An information retrieving apparatus comprising:
reproduction information storing means for storing a plurality of pieces of reproduction information to be reproduced;
retrieving means for retrieving the reproduction information by using a preset retrieval parameter and a retrieving method, and outputting a first retrieval result;
history storing means for storing reproduction history of the reproduction information reproduced in the past; and
rearranging means, with respect to at least a part of the reproduction information included in both of the first retrieval result and the reproduction history, for rearranging a reproduction order in the first retrieval result to a reproduction order which is the same as that of the part in the reproduction history, thereby obtaining a second retrieval result.

2. The information retrieving apparatus according to claim 1,
wherein when the reproduction order of the reproduction information in the first retrieval result, in the reproduction information being included in both of the first retrieval result and the reproduction history, is connected to the end of the reproduction order of the reproduction information in the reproduction history, the rearranging means rearranges the reproduction order in the first retrieval result to the same reproduction order as that in the reproduction history, with respect to the reproduction information in the reproduction order in the first retrieval result preceding from the reproduction order in the reproduction history by preset number of pieces of interval reproduction information, thereby obtaining the second retrieval result.

3. The information retrieving apparatus according to claim 2,
wherein the number of pieces of interval reproduction information is the number of pieces of reproduction information, which is set on the basis of the number of pieces of the reproduction information included in the reproduction history and stored.

4. The information retrieving apparatus according to claim 3,
wherein the number of pieces of interval reproduction information is the number of pieces of reproduction information obtained by adding "1" to the number of pieces of reproduction information included in the reproduction history and stored.

5. The information retrieving apparatus according to claim 1,
wherein the rearranging means rearranges the reproduction order in the first retrieval result to the same reproduction order as that in the reproduction history with respect to all of the reproduction information included in both of the first retrieval result and the reproduction history, thereby obtaining the second retrieval result.

6. The information retrieving apparatus according to any one of claims 1 to 5,
wherein the rearranging means performs the rearranging process by inserting at least one piece of the reproduction information included in the first retrieval result other than the reproduction information as a target of the rearranging process, between the reproduction information pieces as targets of the rearranging process.

7. The information retrieving apparatus according to claim 1,
wherein the rearranging means obtains the second retrieval result by setting the reproduction order of the part after the reproduction order of the other reproduction information included in the first retrieval result.

8. The information retrieving apparatus according to claim 7,
wherein when the reproduction order of the reproduction information in the first retrieval result, in the reproduction information being included in both of the first retrieval result and the reproduction history, is connected to the end of the reproduction order of the reproduction information in the reproduction history, the rearranging means sets the reproduction order of the reproduction information in the first retrieval result preceding from the reproduction order in the reproduction history by preset number of pieces of interval reproduction information to the position after the reproduction order of the other reproduction information included in the first retrieval result, thereby obtaining the second retrieval result.

9. An information retrieving apparatus comprising:
reproduction information storing means for storing a plurality of pieces of reproduction information to be reproduced;
retrieving means for retrieving the reproduction information by using a preset retrieval parameter and a retrieving method, and outputting a first retrieval result;
history storing means for storing reproduction history of the reproduction information reproduced in the past; and
rearranging means for eliminating at least a part of the reproduction information included in both of the first retrieval result and the reproduction history, from the first retrieval result, thereby obtaining a second retrieval result.

10. The information retrieving apparatus according to claim 9,
wherein when the reproduction order of the reproduction information in the first retrieval result, in the reproduction information being included in both of the first retrieval result and the reproduction history, is connected to the end of the reproduction order of the reproduction information in the reproduction history, the rearranging means eliminates, from the first retrieval result, the reproduction information in the reproduction order in the first retrieval result preceding the reproduction order in the reproduction history by preset number of pieces of interval reproduction information, thereby obtaining the second retrieval result.

11. The information retrieving apparatus according to claim 9 or 10,
wherein the rearranging means eliminates all of the reproduction information included in both of the first retrieval result and the reproduction history, from the first retrieval result, thereby obtaining a second retrieval result.

12. The information retrieving apparatus according to any one of claims 1 to 11,
wherein when any of the reproduction information included in the past reproduction history is newly reproduced, the history storing means deletes the newly reproduced reproduction information in the past reproduction history from the past reproduction history, and stores the resultant as new reproduction history obtained by updating the past reproduction history by setting the newly reproduced reproduction information as the reproduction information most recently reproduced.

13. The information retrieving apparatus according to any one of claims 1 to 12,
wherein the retrieving means obtains, as the first retrieval result, a result of rearranging, at random, reproduction orders of the reproduction information retrieved by using the retrieval parameter and the retrieving method.

14. The information retrieving apparatus according to any one of claims 1 to 13,
wherein the number of pieces of the reproduction information included in the reproduction history and stored is the half of the number of pieces of the reproduction information included in the first retrieval result.

15. An information reproducing apparatus comprising:
the information retrieving apparatus according to any one of claims 1 to 14; and
reproducing means for reproducing the reproduction information retrieved by the retrieving means by using a reproduction order in the second retrieval result.

16. An information retrieving method executed in an information retrieving apparatus including reproduction information storing means for storing a plurality of pieces of reproduction information to be reproduced, and history storing means for storing reproduction history of the reproduction information reproduced in the past, comprising:
a retrieving step for retrieving the reproduction information in the reproduction information storing means by using a preset retrieval parameter and a retrieving method, and outputting a first retrieval result; and
a rearranging step, with respect to at least a part of the reproduction information included in both of the first retrieval result and the stored reproduction history, for rearranging a reproduction order in the first retrieval result to a reproduction order which is the same as that of the part in the reproduction history, thereby obtaining a second retrieval result.

17. An information retrieving method executed by an information retrieving apparatus including reproduction information storing means for storing a plurality of pieces of reproduction information to be reproduced, and history storing means for storing reproduction history of the reproduction information reproduced in the past, comprising:
a retrieving step for retrieving preset retrieval number of pieces of the reproduction information in the reproduction information storing means by using a preset retrieval parameter and a retrieving method, and outputting a first retrieval result; and
a rearranging step for eliminating at least a part of the reproduction information included in both of the first retrieval result and the reproduction history from the first retrieval result, thereby obtaining a second retrieval result.

18. An information reproducing method comprising:
the information retrieving method according to claim 16 or 17; and
a reproducing step for reproducing the reproduction information retrieved in the retrieving step by using a reproduction order in the second retrieval result.

19. An information retrieving program for making a computer included in an information retrieving apparatus having reproduction information storing means for storing a plurality of pieces of reproduction information to be reproduced, and history storing means for storing reproduction history of the reproduction information reproduced in the past, function as the retrieving means and the rearranging means in any of claims 1 to 14.

20. An information recording medium where the information retrieving program according to claim 19 is recorded so that it can be read by the computer.
